# EUROPÄISCHE PATENTSCHRIFT

(11) **EP 3 988 924 B1**
(45) Veröffentlichungstag und Bekanntmachung des Hinweises auf die Patenterteilung: **29.11.2023**
(21) Anmeldenummer: 21199753.1
(22) Anmeldetag: 29.09.2021
(51) Int. Cl.: G01N 21/25, G01N 21/64, G01N 35/04, G01N 21/03, G01N 35/00

(54) **KOMBINATION EINES MIKROPLATTEN-LESEGERÄTS MIT EINER ZUBEHÖRVORRICHTUNG**
COMBINATION OF A MICROPLATE READER WITH AN ACCESSORY DEVICE
COMBINAISON D'UN LECTEUR DE MICROPLAQUES AVEC UN APPAREIL ACCESSOIRE

(30) Priorität: 23.10.2020 DE 102020128003
(43) Veröffentlichungstag der Anmeldung: 27.04.2022
(73) Patentinhaber: BMG Labtech GmbH, 77799 Ortenberg (DE)
(72) Erfinder: Rager, Stefan, Hohberg (DE)
(74) Vertreter: LBP Lemcke, Brommer & Partner Patentanwälte mbB

(56) Entgegenhaltungen:
- WO-A1-02/072423
- WO-A1-2012/032124
- US-A- 5 849 486
- US-A- 5 955 028
- US-A1- 2001 045 358
- US-A1- 2007 188 750
- US-A1- 2008 044 879
- US-A1- 2010 184 616
- US-A1- 2010 203 573
- US-A1- 2011 076 690
- US-A1- 2016 003 859
- US-A1- 2019 221 005
- US-B1- 8 858 886

## Beschreibung

Die vorliegende Erfindung betrifft ein Mikroplatten-Lesegerät mit einer Aufnahmevorrichtung zur Aufnahme einer Mikroplatte vorgegebener Abmessungen, die eine Vielzahl von Vertiefungen aufweist, und mit einem optischen Detektor zur Erfassung einer optischen Strahlung an jeweils einzelnen der Vertiefungen einer in der Aufnahmevorrichtung aufgenommenen Mikroplatte, wobei die Aufnahmevorrichtung über eine Positioniermechanik in mindestens eine Raumrichtung beweglich angeordnet ist, um die aufgenommene Mikroplatte bezüglich des optischen Detektors für aufeinanderfolgende Messungen an unterschiedlichen Vertiefungen zu positionieren.

Bei einer Mikroplatte handelt es sich um einen Probenträger zur Durchführung photometrischer oder anderer Messungen, der eine Vielzahl in regelmäßigen Abständen angeordneter Vertiefungen - englisch Wells - aufweist, in welche Proben pipettiert werden können. Mikroplatten haben genormte Abmessungen mit jeweils gleicher Grundfläche und zum Teil variabler Höhe und sind mit unterschiedlicher Anzahl Wells verfügbar, zum Beispiel 6×8, 8×12, 16×24, 32×48 oder 48×72 Wells. Ein Mikroplatten-Lesegerät dient zum "Auslesen" von Mikroplatten, indem an den einzelnen Wells photometrische Messungen durchgeführt werden. Hierzu besitzt ein Mikroplatten-Lesegerät einen optischen Detektor wie etwa einen Photomultiplier, der von den in den einzelnen Wells enthaltenen Proben aufgrund Absorption, Lumineszenz oder Fluoreszenz aus- oder durchgehende optische Strahlung detektiert. Die Mikroplatte wird hierzu in eine Aufnahmevorrichtung eingesetzt, die über eine Positioniermechanik in X- und Y-Richtung beweglich ist. Zum sequenziellen Auslesen der einzelnen Wells werden diese nacheinander von der Positioniermechanik in den Erfassungsbereich des optischen Detektors gebracht.

Die photometrische Untersuchung von Probenreihen mit einem Mikroplatten-Lesegerät kommt in breiten Anwendungsfeldern zum Einsatz, unter anderem zum Erkennen von biologischen, chemischen, biochemischen oder physikalischen Reaktionen der Proben. Je nach Anwendungsfall können Zusatzfunktionen benötigt werden, um entsprechende Reaktionen auszulösen, zu unterhalten, oder in sonstiger Weise zu unterstützen. Darüber hinaus können auch Messsensoren für zusätzliche Messfunktionen benötigt werden. Werden solche Zusatzfunktionen benötigt, müssen entsprechende Gerätschaften in das Mikroplatten-Lesegerät integriert sein. Entsprechende anwendungsspezifische Anpassungen sind aufwendig und teuer und müssen zudem bereits bei der Konzeption und Auslegung des Gesamtgeräts berücksichtigt werden.

Darüber hinaus kann es erforderlich sein zur Kalibrierung und Qualifizierung zusätzliche Sensoren in dem Gerät vorzusehen, um zu überprüfen, ob das Gerät die entsprechenden Spezifikationen einhält und um erforderlichenfalls Geräteparameter einzustellen. Derartige Überprüfungen und Einstellungen am Gerät können sowohl vor Auslieferung als auch im Laufe der Lebenszeit des entsprechenden Geräts erforderlich sein. Derartige zusätzliche Sensoren erhöhen ebenfalls die Komplexität des Geräts.

Die US 2007/0188750 A1 offenbart eine Detektionseinrichtung zur Echtzeiterfassung von optischen Signalen einer Mikroplatte, wobei die Mikroplatte eine Schnittstelle aufweist, welche eine Verbindung der Mikroplatte mit dem Gesamtsystem ermöglicht.

Die US 5,849,486 A offenbart eine Vorrichtung zur Durchführung von mikrobiologischen Analysen, wobei mittels eines Biochips eine Analyse einer Probe in einer Durchflusszelle erfolgt. Insbesondere wird die Veränderung einer Probe, welche Fluoreszenz ausstrahlt, während der Elektrophorese detektiert.

Die US 5,955,028 A offenbart ein Analysesystem mit einem Probesubstrat, in welchem mehrere Reservoirs über Kanäle zu einem Kanal zusammengeführt werden, an welchen eine Analyse erfolgt (D3, Anspruch 1, Figuren 1 und 2). Das Probensub-strat ist hierbei in einem Adapter angeordnet, welcher selbst ein optisches System umfassen kann oder welcher auf eine Basiseinheit 112 angeordnet wird, welche das optische System umfasst (D3, Spalte 12, Zeilen 7 ff). Der Adapter (Bezugs-zeichen 14/114) weist selbst eine Schnittstelle auf, welche eine Energie- und Datenverbindung mit der Basiseinheit (Bezugszeichen 12/112) ermöglicht (D3, Spalte 11, Zeile 4 ff).

Die US 2008/0044879 A1 offenbart ein System zur optischen Messung von lonenkonzentration in biologischen Proben, wobei biologische Proben in Vertiefungen einer Mikroplatte oder ähnlichem eingebracht und ein lonensensor in die Proben eingetaucht wird, wobei anschließend ein Wirkstoff zu den hinzugegeben wird, um die Fluoreszenz der Proben mit dem Sensor zu detektieren.

Die US 2001/0045358 A1 offenbart eine Zubehörvorrichtung in Form eines Beleuchtungs- und Detektionssystem zur Verwendung beim Beleuchten einer Vielzahl an Proben in einer Vielzahl von im Wesentlichen parallel entlang einer Detektionsrichtung verlaufenden Mikrokanälen, die in einem Detektionsbereich auf einer Mikrofluidvorrichtung positioniert sind, sowie zum Detektieren von aus dem Detektionsbereich emittierter Strahlung.

Die WO 02/072423 A1 offenbart einen Mikroplattendeckel, welcher Strukturen für die Verarbeitung und den Transport von Flüssigkeiten enthält, die eine kontrollierte Zufuhr von kleinen Mengen an Proben und Reagenzien zu einer Mikroplatte ermöglichen und eine Verdunstung verhindern.

Die US 8,858,886 B1 offenbart ein Fluoreszenzmesssystem mit einer Basiseinheit und einer eigenständigen optischen Mehrkanal-Kassette, wobei in der Basiseinheit eine Mikroplatte einsetzbar ist und die optische Mehrkanal-Kassette mehrere optische Baugruppen mit jeweils einer Anregungslichtquelle umfasst, wobei die eigenständige optische Mehrkanal-Kassette mit einer optischen Einrichtung der Basisvorrichtung in Wirkverbindung steht.

Die US 2010/0203573 A1 offenbart ein Instrument zur Analyse von Proben, welche in einer Probenplatte mit einer Vielzahl von Vertiefungen angeordnet sind, wobei das System mehrere Module in Form von Funktionseinheiten aufweist, welche auf einem Rahmen gemeinsam angeordnet sind.

Es ist daher eine Aufgabe der vorliegenden Erfindung, ein Mikroplatten-Lesegerät anzugeben, welches in unterschiedlichen Anwendungsgebieten flexibel einsetzbar ist und insbesondere eine Nachrüstung von Zusatzfunktionen ermöglicht.

Die Aufgabe wird gelöst durch die Merkmale des Anspruchs 1. Vorteilhafte Ausgestaltungen sind den abhängigen Ansprüchen zu entnehmen.

Bei einem Mikroplatten-Lesegerät der eingangs genannten Art ist vorgesehen, dass die beweglich angeordnete Aufnahmevorrichtung für Mikroplatten eine Schnittstelleneinrichtung aufweist. Erfindungsgemäß ist eine Zubehörvorrichtung in die Aufnahmeeinrichtung eingesetzt und die Schnittstelleneinrichtung derart ausgebildet eine Energie- und/oder Datenverbindung - vorzugsweise Energie- und Datenverbindung - und/oder eine Verbindung zur Medien-Versorgung und/oder Medien-Entsorgung von dem Mikroplatten-Lesegerät zu der gemeinsam mit oder anstelle einer Mikroplatte oder einem anderen Probenbehältnis in die Aufnahmevorrichtung eingesetzten Zubehörvorrichtung für Zusatzfunktionen bereitzustellen, wobei die Zubehörvorrichtung eine mit der Schnittstelleneinrichtung des Mikroplatten-Lesegeräts zusammenwirkende Gegenstelle aufweist, über die eine von der Zubehörvorrichtung bereitgestellte Zusatzfunktion angesteuert und/oder mit Energie versorgt wird.

Die Aufnahmevorrichtung ist über die Positioniermechanik bevorzugt in zwei Raumrichtungen (X- und Y-Richtung) gegenüber dem optischen Detektor für aufeinanderfolgende Messungen an unterschiedlichen Vertiefungen positionierbar. Denkbar ist jedoch auch, dass der optische Detektor aus mehreren Sensoren besteht, mit denen eine ganze Zeile an Vertiefungen in einem Schritt gemessen werden kann. In diesem Fall erfolgt das Auslesen der Mikroplatte zeilenweise, sodass die Aufnahmevorrichtung in nur einer Raumrichtung gegenüber dem Detektor verstellbar zu sein braucht.

Im Rahmen der vorliegenden Erfindung ist auch ein Mikroplatten-Lesegerät mit umfasst, welches als optischen Detektor einen bildgebenden Detektor wie etwa eine CCD-Kamera mit geeigneter Vergrößerungsoptik (Objektiv) oder einem Mikroskop aufweist und ausgebildet ist, Bildserien der einzelnen Wells zu erzeugen.

Die Schnittstelleneinrichtung kann an der Aufnahmevorrichtung direkt oder einem mechanisch mit der Aufnahmevorrichtung verbundenen Bauteil, etwa einem Schlitten der Positioniermechanik angeordnet sein.

Die Schnittstellenvorrichtung ermöglicht es, Zusatzhardware in Form einer Zubehörvorrichtung mit Energie und Kommunikation zu versorgen. Als Aufnahme dient die ohnehin vorhandene Aufnahmevorrichtung für Mikroplatten. Zusatzfunktionen können somit in einer Zubehörvorrichtung integriert werden, die kompatibel zur Aufnahmevorrichtung für Mikroplatten und der dort vorgesehenen Schnittstellenvorrichtung ist. Die genannte Schnittstelleneinrichtung hat zunächst keinen Einfluss auf das Gesamtgerät. Das Einsetzen einer entsprechenden Zubehörvorrichtung in die Aufnahmevorrichtung für Mikroplatten ermöglicht eine tiefe Integration in das Gesamtgerät bei hohem Automatisierungsgrad. Durch Softwareupdates einer Steuerungsvorrichtung des Mikroplatten-Lesegerätes können auch Funktionen unterstützt werden, die bei der Herstellung des Mikroplatten-Lesegerätes selbst noch nicht vorgesehen waren. Eine entsprechende Schnittstellenvorrichtung in der Aufnahmevorrichtung ist universell einsetzbar und einfach und kostengünstig zu realisieren. Anwendungsspezifische Zusatzfunktionen können in separate Zubehörvorrichtungen ausgelagert werden. Mit gesondert gefertigtem Zubehör sind Zusatzfunktionen realisierbar, die nicht nur der Hersteller des Lesegerätes bereitgestellt, sondern die vom Anwender selbst oder von Dritten entwickelt werden. Zusatzfunktionen können zusätzlich, in Kombination oder sogar zeitgleich mit den Grundfunktionen des Mikroplatten-Lesegerätes verwendet werden.

Im Rahmen der vorliegenden Erfindung kann die Schnittstelleneinrichtung insbesondere derart ausgebildet sein, dass die Energie- und/oder Datenverbindung über elektrische Kontakte, mittels optischer Signalübertragung und/oder durch Kopplung über elektrische, magnetische oder elektromagnetische Felder hergestellt wird. Die Energie- und/oder Datenverbindung kann somit über eine Steckverbindung oder auch drahtlos erfolgen. Eine Energieübertragung kann über elektrische Kontakte oder auch induktiv erfolgen. Die Schnittstelleneinrichtung kann hierbei auf herkömmlichen Schnittstellenformaten, etwas einem USB-Anschluss für elektrische Strom- und Datenverbindung, oder einer drahtlos-Schnittstelle nach den RFID, WLAN oder Bluetooth-Standards basieren.

Im Rahmen der Erfindung kann vorgesehen sein, dass die Schnittstelleneinrichtung eine mittels einer Schlauchverbindung ausgeführte Medienschnittstelle zur Medienversorgung oder Medienentsorgung umfasst, insbesondere zur Ver- und/oder Entsorgung mit bzw. von mindestens einem der folgenden Medien: Luft, CO₂, Sauerstoff, Stickstoff, Wasser (ggf. temperiert zur Kühlung oder Erwärmung der Proben), Reagenzien. Auf diese Weise können in den Wells einer Mikroplatte ablaufende Reaktionen unterstützt, unterhalten oder auf sonstige Weise zum Ablauf solcher Reaktionen beigetragen werden.

Hierbei kann die Medienschnittstelle insbesondere durch eine Schlauchverbindung ausgeführt sein. Hierzu wird vorzugsweise an der Schnittstellenvorrichtung ein entsprechender Schlauchanschluss vorgesehen, der mit einem passenden Gegenstück auf der Seite einer mit der Schnittstelleneinrichtung zusammenwirkenden Zubehörvorrichtung verbunden wird.

Darüber hinaus kann im Rahmen der vorliegenden Erfindung eine Steuerungseinrichtung vorgesehen sein, die ausgebildet ist, über die Schnittstelleneinrichtung Zusatzfunktionen einer gemeinsam mit oder anstelle einer Mikroplatte in die Aufnahmevorrichtung eingesetzten Zubehörvorrichtung zu aktivieren. Dies kann durch Freischalten einer Energieversorgung oder durch entsprechende Steuerbefehle an einer Datenschnittstelle geschehen. Eine derartige Steuerungseinrichtung kann insbesondere als programmierbare Steuerungseinrichtung ausgeführt sein, die mit einem entsprechenden Steuerungsprogramm betrieben wird. Ein Steuerungsprogramm lässt sich jederzeit aktualisieren, um so zusätzliche Funktionen von speziellen Zubehörvorrichtungen zu unterstützen und zu aktivieren. Darüber hinaus empfängt die Steuerungseinrichtung in Rückrichtung Daten, insbesondere Sensordaten, Messdaten, Bestätigungsnachrichten und dergleichen von einer über die Schnittstelleneinrichtung gesteuerten Zubehörvorrichtung und verarbeitet diese.

Die Zubehörvorrichtung kann entweder gemeinsam mit einer Mikroplatte in die Aufnahmevorrichtung des Mikroplatten-Lesegeräts eingelegt werden oder anstelle einer solchen Mikroplatte. Im erstgenannten Fall ist selbstverständlich auch umfasst, dass die Zubehörvorrichtung auf einer Mikroplatte integriert angeordnet ist. Die Verwendung einer Zubehörvorrichtung anstelle einer Mikroplatte kann vorgesehen sein, wenn die Zubehörvorrichtung Zusatzfunktionen zur Wartung, Qualifizierung, Kalibrierung oder Reinigung des Mikroplatten-Lesegeräts bereitstellt.

Eine weitere Verwendung einer Zubehörvorrichtung anstelle einer Mikroplatte kann vorgesehen sein, wenn die Zubehörvorrichtung neben einer Zusatzfunktion auch ein oder mehrere Probenbehältnisse trägt. In diesem Fall dient die Zusatzfunktion zur Manipulation oder Messung der Proben in den Behältnissen, die zweckmäßig austauschbar sind und als Verbrauchsware standardisiert sind. Auch spezielle Behältnisse, beispielsweise mit eingelassenen Elektroden können tauschbar mit der zusätzlichen Messelektronik auf der Zubehörvorrichtung in dem Format der Mikroplatte eingerichtet werden.

Eine Zubehörvorrichtung, die anstelle einer Mikroplatte eingelegt wird, kann zusätzlich zu einer von ihr bereitgestellten und über die Schnittstelleneinrichtung angeschlossene Zusatzfunktion auch als ein Adapter eingesetzt werden, um nach einem Baukastenprinzip ein oder mehrere einzelne oder miteinander verbundene (sogenannte Stripes) Probenbehälter aufzunehmen und an die standardisierte Plattengröße (127,76mm × 85,48mm gemäß ANSI-Standard auf Empfehlung der Society for Biomolecular Screening) anzupassen. Die Zubehörvorrichtung hat somit eine Doppelfunktion, einerseits als mechanischer Adapter für Probenbehälter abweichender Abmessungen, anderseits zur Durchführung von Zusatzfunktionen an den aufgenommenen Probenbehältern.

Eine Verwendung einer Zubehörvorrichtung gemeinsam mit einer Mikroplatte kann insbesondere vorgesehen sein, um in den Wells einer Mikroplatte ablaufende Reaktionen auszulösen oder zu unterstützen oder zusätzliche Messmethoden zu ermöglichen. Zur gemeinsamen Nutzung kann die Zubehörvorrichtung ober- und/oder unterhalb der Mikroplatte eine Funktionseinheit tragen. Eine optische Messung kann in diesem Fall von der jeweils gegenüberliegenden Seite erfolgen. Die Zubehörvorrichtung kann auch so ausgelegt werden, dass für einen Teil der Mikroplatte die Lichtdurchgängigkeit gewährleistet ist und die Zusatzfunktionseinheit den anderen Teil ober- und oder unterhalb der Mikroplatte als Bauraum verwendet.

Im Rahmen der Erfindung kann eine Zubehörvorrichtung bei einer eingelegten Mikroplatte auch derart in die Aufnahmevorrichtung eingefügt werden, indem sie auf die Schnittstelleneinrichtung aufgesteckt wird. Bei geeigneter Miniaturisierung der Zubehörvorrichtung kann auf eine weitere mechanische Halterung verzichtet werden. Vorzugsweise können z.B. Sensoren auf die Schnittstelleneinrichtung aufgesteckt werden, um in unmittelbarer Nähe zur Probe Messwerte wie beispielsweise die Luftfeuchtigkeit zu messen.

Bei einer Ausführungsform einer Zubehörvorrichtung ist diese ausgebildet, gemeinsam mit einer Mikroplatte in die Aufnahmevorrichtung des Mikroplatten-Lesegeräts eingelegt werden und weist mindestens eine Temperiereinheit, insbesondere Heizung, auf, die über die Schnittstelleneinrichtung angesteuert und mit Energie versorgt wird, um in Vertiefungen der Mikroplatte enthaltene Proben zu temperieren. Auf diese Weise kann insbesondere eine Inkubationsfunktion des Mikroplatten-Lesegeräts geschaffen oder verbessert werden.

Bei einer weiteren Ausführungsform kann die Zubehörvorrichtung ausgebildet sein, gemeinsam mit einer Mikroplatte - oberhalb oder unterhalb dieser - in die Aufnahmevorrichtung des Mikroplatten-Lesegeräts eingelegt zu werden und weist mindestens eine Beleuchtungseinrichtung auf, die über die Schnittstelleneinrichtung angesteuert und mit Energie versorgt wird. Auf diese Weise kann bei in die Vertiefungen der Mikroplatte eingefüllten Proben durch Lichteinstrahlung eine Reaktion herbeigeführt oder eine optische Eigenschaft gemessen werden. Die Beleuchtungseinrichtung kann insbesondere ausgebildet sein, eine individuelle Bestrahlung der einzelnen Wells der Mikroplatte zu erzeugen. Dies kann beispielsweise mittels individueller LEDs je Wells erreicht werden. Die Ansteuerung und Versorgung der LEDs kann über die Schnittstelle der Aufnahmevorrichtung erfolgen. So sind beispielsweise Experimente möglich, die eine kontinuierliche oder zeitgesteuerte Bestrahlung aller Proben erfordert, auch wenn die Proben nacheinander, beispielsweise in Fluoreszenz gemessen werden.

Bei einer weiteren Ausführungsform ist die Zubehörvorrichtung ausgebildet, gemeinsam mit einer Mikroplatte in die Aufnahmevorrichtung des Mikroplatten-Lesegeräts eingelegt zu werden und weist zu einer oder mehreren der Vertiefungen der Mikroplatte führende Elektroden sowie eine mit den Elektroden verbundene Steuer- oder Messelektronik auf, die über die Schnittstelleneinrichtung angesteuert wird, um in den Vertiefungen der Mikroplatte enthaltene Proben elektrisch anzuregen oder eine elektrische Eigenschaft der Proben zu messen. Somit können gleichzeitig mit einer photometrischen Untersuchung auch elektrische Messungen oder elektrische Anregungen vorgenommen werden. Insbesondere kann durch eine elektrische Anregung der Proben eine Reaktion herbeigeführt werden, die dann wiederum photometrischen beobachtet wird.

In einer weiteren Ausführungsform ist die Zubehörvorrichtung ausgebildet, in die Aufnahmevorrichtung des Mikroplatten-Lesegeräts eingelegt zu werden und weist mindestens einen Temperatursensor auf, dessen Temperaturmesswerte über die Schnittstelleneinrichtung übertragen werden. Eine solche Temperaturmessfunktion kann insbesondere zur Überprüfung oder Kalibrierung einer Inkubationsfunktion des Mikroplatten-Lesegeräts verwendet werden. Die Zubehörvorrichtung kann weitergehend ausgebildet sein, Probenbehältnisse zu tragen, um mindestens einen Fühler des mindestens einen Temperatursensors in das Behältnis einzubringen, um unmittelbar die Probentemperatur zu messen.

Bei einer weiteren Ausführungsform ist die Zubehörvorrichtung ausgebildet, in die Aufnahmevorrichtung des Mikroplatten-Lesegeräts eingelegt zu werden und weist mindestens einen Feuchtesensor auf, dessen Luftfeuchte-Messwerte über die Schnittstelleneinrichtung übertragen werden. Ein solcher Feuchtesensor kann ebenfalls zur Überprüfung oder Kalibrierung einer Inkubationsfunktion des Mikroplatten-Lesegeräts verwendet werden.

Bei einer weiteren Ausführungsform ist die Zubehörvorrichtung ausgebildet, in die Aufnahmevorrichtung des Mikroplatten-Lesegeräts eingelegt zu werden und weist mindestens einen Sensor zum Erfassen der Lage oder Beschleunigung auf, dessen Positions- oder Beschleunigungswerte über die Schnittstelleneinrichtung übertragen werden. Ein solcher Lage- oder Beschleunigungssensor ist insbesondere hilfreich zur Überprüfung oder Kalibrierung der Positioniermechanik des Mikroplatten-Lesegeräts, um beispielsweise sicherzustellen, dass die einzelnen Vertiefungen einer Mikroplatte vorgegebener Bauart korrekt in den Erfassungsbereich des optischen Detektors positioniert werden.

Bei einer weiteren Ausführungsform ist der Zubehörvorrichtung ausgebildet, in die Aufnahmefunktion des Mikroplatten-Lesegerätes eingelegt zu werden und weist mindestens einen Gassensor zum Erfassen einer künstlich hergestellten Atmosphäre auf, dessen Messwerte für gemessene Gaskonzentrationen über die Schnittstelleneinrichtung übertragen werden. Ein solcher Gassensor ist insbesondere zur Überprüfung oder Kalibrierung einer Atmosphärenregelungsfunktion des Mikroplatten-Lesegeräts hilfreich.

Bei einer weiteren Ausführungsform ist die Zubehörvorrichtung ausgebildet, in die Aufnahmevorrichtung des Mikroplatten-Lesegeräts eingelegt zu werden und weist mindestens einen optischen Sensor zum Vermessen einer Anregungslichtquelle des Mikroplatten-Lesegeräts auf, dessen Messwerte über die Schnittstelleneinrichtung übertragen werden. Ein solcher optischer Sensor ist insbesondere hilfreich zur Überprüfung oder Kalibrierung einer Anregungslichtquelle des M ikroplatten-Lesegeräts.

Bei einer weiteren Ausführungsform ist die Zubehörvorrichtung ausgebildet, in die Aufnahmevorrichtung des Mikroplatten-Lesegeräts eingelegt zu werden und weist mindestens eine Lichtquelle auf, die ausgebildet ist, ein optisches Signal mit steuerbarer Intensität, Wellenlänge und/oder Signalverlauf zu erzeugen, die über die Schnittstelleneinrichtung mit Energie versorgt und angesteuert wird. Eine solche Lichtquelle ist insbesondere hilfreich zur Überprüfung oder Kalibrierung des optischen Detektors des Mikroplatten-Lesegeräts oder weiterer im Mikroplatten-Lesegerät verbauter Messsysteme. Ebenso kann eine solche Lichtquelle zur Bestrahlung von Proben mit oder ohne Anregung der betreffenden Probe eingesetzt werden. Dazu können auf der Zubehörvorrichtung Steckplätze oder Positionsplätze für Probenbehälter vorgesehen werden.

Bei einer weiteren Ausführungsform ist die Zubehörvorrichtung ausgebildet, in die Aufnahmevorrichtung des Mikroplatten-Lesegeräts eingelegt zu werden und weist mindestens einen Berührungs- oder Annäherungssensor auf, dessen Messwerte über die Schnittstelleneinrichtung übertragen werden. Ein solcher Berührungs- oder Annäherungssensor ist insbesondere hilfreich zur Überprüfung oder Kalibrierung von Positioniergenauigkeiten beweglicher Teilsysteme des Mikroplatten-Lesegeräts.

Bei einer weiteren Ausführungsform ist die Zubehörvorrichtung ausgebildet, in die Aufnahmevorrichtung des Mikroplatten-Lesegeräts eingelegt zu werden und weist mindestens eine UV-Lichtquelle zum Desinfizieren des Innenraums des Mikroplatten-Lesegeräts auf, die über die Schnittstelleneinrichtung angesteuert und mit Energie versorgt wird. Auf diese Weise kann durch Einsetzen der entsprechenden Zubehörvorrichtung auf einfache und schnelle Weise der Innenraum des Mikroplatten-Lesegeräts desinfiziert werden.

Bei einer weiteren Ausführungsform ist die Zubehörvorrichtung ausgebildet, in die Aufnahmevorrichtung des Mikroplatten-Lesegeräts eingelegt zu werden und weist mindestens eine Staubsaugvorrichtung zum Reinigen des Innenraums oder eine Blasvorrichtung zur Linsenreinigung des Mikroplatten-Lesegeräts auf, die über die Schnittstelleneinrichtung angesteuert und mit Energie versorgt wird. Somit kann durch Einsetzen der entsprechenden Zubehörvorrichtung auf einfache Weise eine Reinigung des Innenraums und von optischen Linsen durchgeführt werden.

Bei einer weiteren Ausführungsform ist die Zubehörvorrichtung ausgebildet, in die Aufnahmevorrichtung des Mikroplatten-Lesegeräts eingelegt zu werden und weist mindestens einen Lüfter auf, der zum schnellen Abkühlen oder zum schnellen Luftwechsel im Innenraum des Mikroplatten-Lesegeräts über die Schnittstelleneinrichtung angesteuert und mit Energie versorgt wird.

Bei einer weiteren Ausführungsform ist die Zubehörvorrichtung ausgebildet, in die Aufnahmevorrichtung des Mikroplatten-Lesegeräts eingelegt zu werden und weist ihrerseits eine bewegliche Aufnahme für eine Mikroplatte oder einen anderen Probenhalter auf sowie einen mit der beweglichen Aufnahme gekoppelten Antrieb zum Schütteln oder Durchmischen von Proben, insbesondere mittels Ultraschall, wobei der Antrieb über die Schnittstelleneinrichtung angesteuert und mit Energie versorgt wird. Durch die Zubehörvorrichtung können somit in der Mikroplatte enthaltene Proben vor, während oder zwischen Messungen durchmischt und aufgeschüttelt werden.

Bei einer weiteren Ausführungsform ist die Zubehörvorrichtung ausgebildet, gemeinsam mit einer Mikroplatte in die Aufnahmevorrichtung eingelegt zu werden und weist einen Aktuator zum Applizieren von Reagenzien, der über die Schnittstelleneinrichtung angesteuert wird, sowie ein Verteilsystem zur Verteilung der Reagenzien in die Vertiefungen der Mikroplatte auf. Insbesondere kann der Aktuator als Ventil oder Dosierpumpe und das Verteilsystem als Mikrokanalsystem ausgeführt sein. Auf diese Weise können in den Vertiefungen ablaufende Reaktionen unterhalten, ausgelöst oder in sonstiger Weise unterstützt werden.

Bei einer weiteren Ausführungsform ist die Zubehörvorrichtung ausgebildet, gemeinsam mit einer Mikroplatte in die Aufnahmevorrichtung eingelegt zu werden und weist mindestens eine Vorrichtung zum Zuführen und gegebenenfalls Verteilen mindestens eines Mediums an mindestens eine der Vertiefungen der Mikroplatte auf, wobei das Medium über die Schnittstelleneinrichtung bereitgestellt wird. Bei dem besagten Medium kann es sich beispielsweise um eine modifizierte Atmosphäre oder Luftfeuchtigkeit handeln, welchem in den Vertiefungen enthaltene Proben ausgesetzt werden sollen.

Bei einer weiteren Ausführungsform ist die Zubehörvorrichtung ausgebildet, gemeinsam mit einer Mikroplatte in die Aufnahmevorrichtung eingelegt zu werden und weist mindestens eine Vorrichtung zum Zerstäuben von Flüssigkeiten zur Nebelbildung auf, wobei vorzugsweise Wasser mit einem Ultraschallgeber vernebelt wird, um eine geeignete Luftfeuchtigkeit über den Proben der Mikroplatte zu erzeugen. Die feuchte Atmosphäre kann mit einem Deckel am Verflüchtigen gehindert bzw. bei gelochten Deckel gebremst werden. Ein Vernebelungszubehör, das anstelle der Mikroplatte eingelegt wird, trägt z.B. ein Reservoir für das zu verdunstende Medium mit innenliegendem Ultraschallgeber sowie Steck- oder Stellplätze für Probenbehälter.

Die Zubehörvorrichtung kann auch ausgebildet sein, Informationen zu der Mikroplatte bereitzustellen. Die Zubehörvorrichtung umfasst dementsprechend eine statische oder wiederbeschreibbare Speichervorrichtung, in der Informationen zu der Mikroplatte abgelegt sind oder abgelegt werden können. Die Speichervorrichtung kann insbesondere in Form eines RFID- oder anderweitigen Nahfeldchips ausgebildet sein. Hierbei ist es insbesondere vorteilhaft, wenn die Zubehörvorrichtung unlösbar mit einer zugehörigen Mikroplatte verbunden ist. In der Speichervorrichtung können z.B. Informationen zur Identifikation sowie Messdaten u.a. zu den verschiedenen Proben in den einzelnen Wells der Mikroplatte abgespeichert werden.

Weitere Vorteile und Eigenschaften der vorliegenden Erfindung ergeben sich aus der nachfolgenden Beschreibung von Ausführungsbeispielen anhand der Figuren. Es zeigt:
- Figur 1: eine Positioniermechanik eines Mikroplatten-Lesegeräts mit einer daran beweglich angeordneten Aufnahmevorrichtung für Mikroplatten, welche mit einer Schnittstelleneinrichtung versehen ist,
- Figur 2: eine Zubehörvorrichtung, welche in die Aufnahmevorrichtung aus Figur 1 eingesetzt werden kann,
- Figur 3: ein Blockdiagramm eines Mikroplatten-Lesegerätes,
- Figur 4: eine Zubehörvorrichtung zur Medienverteilung auf einer gemeinsam mit der Zubehörvorrichtung eingesetzten Mikroplatte,
- Figur 5: in einer Explosionsdarstellung eine Zubehörvorrichtung zum Schütteln einer gemeinsam mit der Zubehörvorrichtung eingesetzten Mikroplatte und
- Figur 6: eine Zubehörvorrichtung mit einer Beleuchtungseinrichtung aus 96 LEDs für eine gemeinsam mit der Zubehörvorrichtung eingesetzten Mikroplatte.

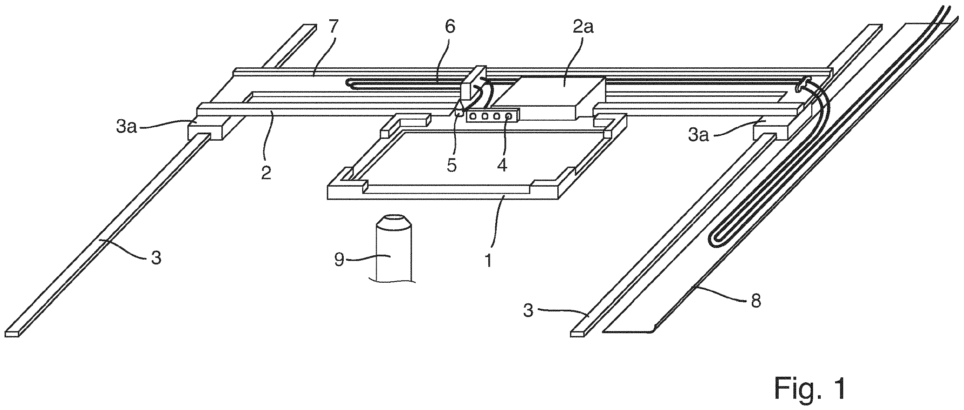

Die wesentlichen Komponenten eines Mikroplatten-Lesegerätes sind in Figur 1 beispielhaft dargestellt. Das Mikroplatten-Lesegerät umfasst eine Aufnahmevorrichtung 1 zur Aufnahme einer Mikroplatte, die als Probenträger dient. Die Aufnahme 1 wird im Folgenden als Plattenträger bezeichnet. Sie nimmt einen Mikroplatte an ihrem Rand auf und sichert diese an den Ecken gegen seitliches Verrutschen. Hierbei können auch zusätzliche, in Figur 1 nicht gezeigte Haltemittel wie etwa eine Feder oder ein Federmechanismus vorgesehen sein, der die Mikroplatte in dem Plattenträger 1 zusätzlich sichert.

Der Plattenträger 1 ist an einem in X-Richtung linear beweglichen Schlitten 2a einer Linearführung 2 gehalten. Die Linearführung 2 ist wiederum über zwei in Y-Richtung linear bewegliche Schlitten 3a an zwei seitlichen Linearführungen 3 befestigt. Über die Linearführungen 2, 3 ist der Plattenträger 1 und mit ihm eine darin aufgenommene Mikroplatte in X und Y-Richtung frei positionierbar. Unterhalb des Plattenträgers 1 ist ein optischer Detektor 9 angeordnet. Bei dem optischen Detektor 9 kann es sich beispielsweise um einen Photomultiplier handeln, mit dem die Intensität einer von einer Probe emittierten oder transmittierten Lichtstrahlung gemessen werden kann. Zusätzlich kann eine hier nicht dargestellte Anregungslichtquelle vorgesehen sein, um die zu messenden Proben optisch anzuregen oder eine Absorption beim Durchtritt durch die Probe zu messen. Anstelle eines Photomultipliers können auch andere optische Detektoren wie etwa eine Photozelle, ein CMOS oder CCD-Sensor, eine Mikrokanalplatte (MCP), eine Photodiode, ein Photowiderstand usw. und insbesondere auch eine Kamera zur Bildaufnahme eingesetzt werden.

Zur Durchführung einer Messung wird über das von den Linearführungen 2, 3 gebildete Positioniersystem die Mikroplatte so bewegt, dass sich die einzelnen Wells der Mikroplatte nacheinander an der von dem Erfassungsbereich des optischen Detektors 9 definierten Messposition befinden. Die Messposition ist in Figur 1 definiert durch die Achse des optischen Detektors 9, mit dem von unten die optische Strahlung senkrecht zur Mikroplatte gemessen wird. Selbstverständlich ist auch eine umgekehrte Anordnung möglich, bei der der optische Detektor oberhalb der Mikroplatte angeordnet wird und die optische Strahlung oberhalb der Mikroplatte misst.

An der zum Schlitten 2a weisenden Seite des Plattenträgers 1 befindet sich eine Schnittstelleneinrichtung mit einer elektrischen Schnittstelle 4 für Stromversorgung und Datenübertragung sowie ein Schlauchanschluss 5, welcher zur Medienversorgung einer in den Plattenträger 1 eingesetzten Zubehörvorrichtung dient. Die elektrische Schnittstelle 4 wird durch elektrische Kontaktflächen realisiert, die hinter der Aufnahmeposition einer Mikroplatte angeordnet sind. Die Kontaktflächen sind hierbei so angeordnet, dass sie bei Verwendung einer normalen Mikroplatte keine Auswirkungen haben. Der Schlauchanschluss 5 ist ebenfalls hinter der Aufnahmeposition der Mikroplatte angeordnet. Die Schnittstelleneinrichtung 4, 5 wird durch ein mehradriges Kabel sowie einen Schlauch 6 mit entsprechenden Systemen des Mikroplattenlesers, also einer Steuerungseinrichtung und einer Mediumversorgungseinrichtung, verbunden. Hinter der Linearführung 2 und seitlich von der rechten Linearführung 3 befinden sich Führungsbleche 7, 8, in denen die Zuleitungen 6, also Kabel und Schlauch für die Schnittstelleneinrichtung 4, 5, jeweils in Schlaufen verlegt sind, sodass die Zuleitungen 6 in geeigneter Weise der Bewegung des Plattenträgers in X- und Y-Richtung folgen können.

In den Plattenträger 1 kann entweder zusätzlich zu einer Mikroplatte oder anstelle einer Mikroplatte eine Zubehörvorrichtung mit geeigneten Abmessungen eingesetzt werden und über die Schnittstelleneinrichtung 4, 5 mit dem Mikroplatten-Lesegerät verbunden werden. Über eine solche Zubehörvorrichtung können Zubehörfunktionen realisiert werden, die beispielsweise für eine bestimmte Messung oder zur Reinigung, Kalibrierung oder Qualifizierung des Mikroplatten-Lesegeräts eingesetzt werden können.

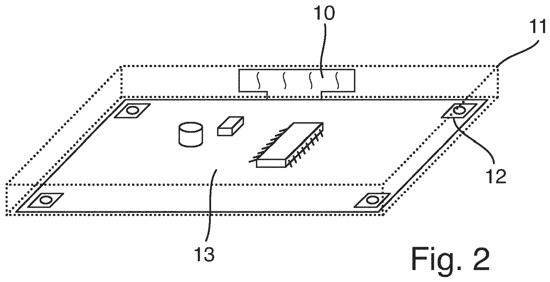

In Figur 2 ist beispielhaft eine solche Zubehörvorrichtung gezeigt, welche anstelle einer Mikroplatte in den Plattenträger 1 eingelegt wird. Die Zubehörvorrichtung weist an ihrer nach hinten zeigenden Seite Kontaktfedern 10 auf, welche beim Einlegen in den Plattenträger 1 eine elektrische Verbindung zu den Kontaktflächen der elektrischen Schnittstelle 4 herstellen. Das Gehäuse 11 der Zubehörvorrichtung ist so ausgeführt, dass es genau in den Plattenträger 1 passt und die Kontaktfedern 10, die eine Gegenstelle für die Schnittstelle 4 bilden, sind an entsprechender Position ausgerichtet.

Im gezeigten Ausführungsbeispiel enthält die Zubehörvorrichtung eine Leiterplatte 13 mit an den Ecken angeordneten UV-Lichtquellen 12, die von einer auf der Leiterplatte 13 untergebrachten Steuerelektronik angesteuert und über die elektrische Schnittstelle 4 elektrisch versorgt und aktiviert werden. Die UV-Lichtquellen dienen im Ausführungsbeispiel dazu, etwaige Keime im Mikroplattenraum des Mikroplatten-Lesegeräts abzutöten und den Mikroplattenraum so desinfizieren.

Anstelle oder zusätzlich zu den UV-Lichtquellen 12 können jedoch auch verschiedene Sensoren wie etwa ein Temperatursensor, ein Feuchtesensor, ein Lage- oder Beschleunigungssensor, ein Gassensor, ein optischer Sensor zum Vermessen einer Anregungslichtquelle des Mikroplatten-Lesegeräts, Berührungs- oder Näherungssensoren oder auch ein Lüfter oder eine Staubsaugvorrichtung angeordnet werden.

Die Zubehörvorrichtung kann auch so ausgebildet sein, dass sie zusammen mit einer Mikroplatte in den Plattenträger 1 eingesetzt werden kann. Die Zubehörvorrichtung kann hierbei Zusatzfunktionen wie etwa eine Speichervorrichtung, eine Heizung, eine Beleuchtungseinrichtung für die Mikroplatte, Mess- oder Anregungselektroden oder auch eine Rüttelvorrichtung für die Mikroplatte aufweisen.

Im Ergebnis wird durch die Schnittstelleneinrichtung 4, 5 eine universelle Schnittstelle geschaffen, über die mithilfe entsprechender Zubehörvorrichtungen beliebige Zusatzfunktionen nachgerüstet werden können. Somit ergibt sich neben vielfältigen Nutzungsmöglichkeiten eine Erweiterbarkeit für eine spätere Nachrüstung von Zusatzfunktionen.

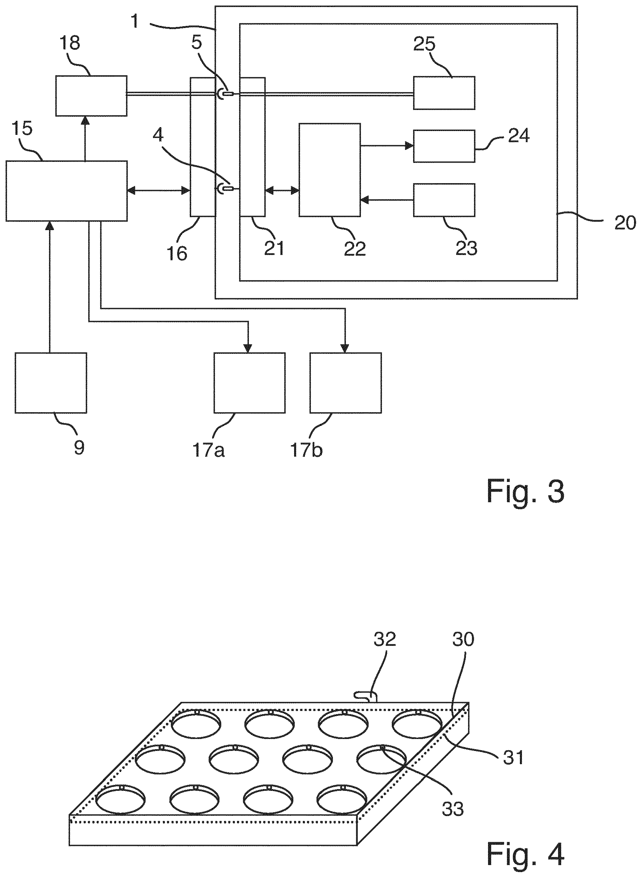

In Figur 3 ist nochmals ein Blockschaltbild des Mikroplatten-Lesegerätes dargestellt. Es umfasst eine Aufnahmevorrichtung 1 für Mikroplatten, wobei an der Aufnahmevorrichtung 1 eine Schnittstelleneinrichtung 16 mit einer elektrischen Schnittstelle 4 und einer Medien-Schnittstelle 5 angeordnet ist. In die Aufnahmevorrichtung 1 ist eine Zubehörvorrichtung 20 eingesetzt. Diese besitzt eine zu der Schnittstelleneinrichtung 16 passende Gegenstelle 21, die mit der Schnittstelleneinrichtung 16 eine elektrische Verbindung und eine Medienverbindung zwischen Mikroplatten-Lesegerät und Zubehörvorrichtung 20 bewirkt. Die Zubehörvorrichtung 20 kann hierbei zusammen mit einer oder anstelle einer Mikroplatte in die Aufnahmevorrichtung eingesetzt sein.

Die Zubehörvorrichtung 20 besitzt eine Steuer- und Messschaltung 22, die beispielsweise durch einen Mikroprozessor realisiert sein kann. Die Steuer- und Messschaltung 22 ist mit einem oder mehreren Sensoren 23 verbunden, liest deren Messwerte aus und übermittelt diese über die Schnittstelleneinrichtung 16 zu dem Mikroplatten-Lesegerät. Außerdem ist die Steuer- und Messschaltung 22 mit einem oder mehreren Aktoren 24 verbunden.

Aktuatoren können je nach Anwendungsfall beispielsweise eine Heizung, eine Beleuchtungseinrichtung, eine UV-Lichtquelle, Elektroden oder einen Aktuator wie etwa ein Ventil oder eine Dosierpumpe, eine Staubsaugvorrichtung oder ein Lüfter sein. Sensoren können je nach Anwendungsfall ein Temperatursensor, ein Feuchtesensor, ein Lage- oder Beschleunigungsensor, ein Gassensor, ein optischer Sensor, ein Berührungs- oder Annäherungssensor oder dergleichen sein.

Außerdem weist die Zubehörvorrichtung 20 eine mit dem Medienanschluss 5 der Schnittstelleneinrichtung verbundenen Medienverteilvorrichtung 25 auf, die an dem Medienanschluss 5 bereitgestelltes Medium in anwendungsspezifischer Weise zu einzelnen Wells einer Mikroplatte weiterleitet.

Das Mikroplatten-Lesegerätes besitzt eine programmierbare Steuerungseinrichtung 15 an sich bekannter Bauart, etwa einen Steuerrechner, Controller, CPU, FPGA, Mikrocontroller oder dergleichen. Die Steuerungseinrichtung ist mit dem optischen Detektor 9 verbunden und empfängt und verarbeitet dessen Messwerte. Außerdem ist die Steuerungseinrichtung 15 mit Antriebsmotoren 17a, 17b verbunden, mit denen die in Figur 1 gezeigten Linearführungen 2, 3 angetrieben werden. Somit kann die Steuerungseinrichtung 15 eine in dem Ausnahmevorrichtung 1 eingelegte Mikroplatte so positionieren, dass nacheinander die einzelnen Wells der Mikroplatte in den Erfassungsbereich des Detektors 9 gebracht werden, und die Mikroplatte so Well für Well ausgelesen werden kann.

Außerdem ist die Steuerungseinrichtung 15 mit der Schnittstelleneinrichtung 16 verbunden und empfängt hierüber Datensignale von der Steuer- und Messschaltung 22 bzw. sendet Befehlssignale an die Steuer- und Messschaltung 22. Schließlich ist die Steuerungseinrichtung 15 mit einer Mediumversorgungseinrichtung 18 verbunden und steuert diese. Die Mediumversorgungseinrichtung 18 ist über eine Schlauchleitung und den Medienanschluss 5 mit der Medienverteilvorrichtung 25 der Zubehörvorrichtung verbunden. Mediumversorgungseinrichtung 18 stellt über den Medienanschluss 5 der Schnittstelleneinrichtung 16 ein oder mehrere Medien für die Verteilvorrichtung 25 der Zubehörvorrichtung 20 bereit. Die Mediumversorgungseinrichtung 18 kann beispielsweise durch eine Medienpumpe und einem mit dieser verbundenen Medienbehälter realisiert sein.

In Figur 4 ist beispielhaft eine Zubehörvorrichtung gezeigt, welche gemeinsam mit einer 12 Well Mikroplatte in den Plattenträger 1 eingelegt wird. Hierzu wird die Zubehörvorrichtung wie ein Deckel auf die Mikroplatte aufgesetzt. Passend zu jedem Mikroplatten-Well hat das Zubehör eine Öffnung, durch welche die Messung ungehindert stattfinden kann. Die Zubehörvorrichtung besitzt einen Hohlraum zwischen einer oberen Wandung 30 und einer unteren Wandung 31, über den sich das Medium verteilen kann. Über einen zur Schnittstelleneinrichtung des Mikroplatten-Lesegeräts passenden Schlauchanschluss 32 wird das Medium in besagten Hohlraum eingeleitet und strömt durch jeweils mindestens eine Düse 33 pro Mikroplatten-Well aus. Dadurch wird erreicht, dass die eingeleitete Atmosphäre direkt zur Probe gelangt und der Zeitpunkt der Gaszufuhr exakt für alle Proben spezifiziert ist im Unterschied zu der Gaseinleitung in den gesamten Inkubator. So wird der Gasverbrauch verringert und die Atmosphärenänderung gelingt schlagartig. Ein in Figur 4 nicht gezeigter Gassensor stellt eine zweckmäßige Ergänzung zur Medienverteilung dar und kann an einen entsprechenden Daten- und Stromanschluss der Schnittstelleneinrichtung aufgesteckt werden, um in der unmittelbaren Nähe der Mikroplatte eine Gaskonzentration zu messen.

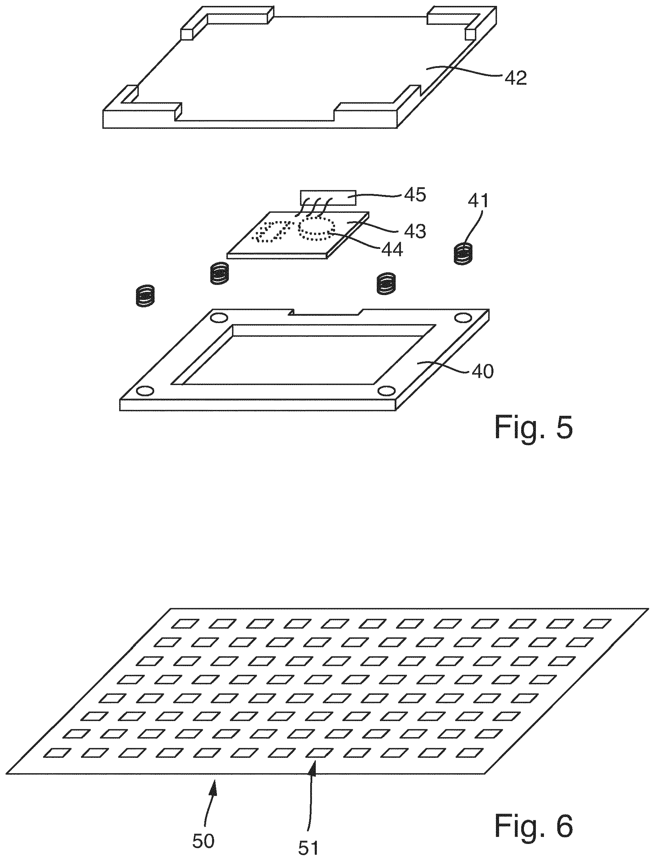

Figur 5 zeigt in einem weiteren Ausführungsbeispiel als Explosionszeichnung den Aufbau einer Zubehörvorrichtung, welche eine Mikroplatte aufnimmt und gemeinsam mit der Mikroplatte in den Plattenträger eingelegt wird. Die Zubehörvorrichtung dient dem Schütteln der Probe zur Durchmischung der Flüssigkeit(en) der Probe. Das durch Bewegung des Plattenträgers erzeugte Schütteln von Proben wird typischerweise in der Schüttelfrequenz durch die Trägheit des Plattenträgers und der bewegten Teile auf einige hundert RPM begrenzt. Zur Erreichung höherer Schüttelfrequenzen bis mehrere tausend RPM wird die gezeigte Zubehörvorrichtung gemeinsam mit der Mikroplatte in den Plattenträger eingelegt, welches mit einem Vibrationsmotor die Mikroplatte gegenüber dem Plattenträger bewegt. Die gezeigte Zubehörvorrichtung ermöglicht die Messung von oben, z.B. Fluoreszenz oder Lumineszenz.

Wie in Figur 5 gezeigt, umfasst die Zubehörvorrichtung einen Rahmen 20, welcher in den Plattenträger des Mikroplatten-Lesegerätes passt. An diesen ist über eine schwingfähige Aufhängung, im Beispiel über Federn 21, die Aufnahme 22 für die Mikroplatte montiert. Die Aufnahme ist vorzugsweise sehr leicht gebaut, weist also eine geringe mechanische Trägheit auf. An der Unterseite der Aufnahme ist eine Leiterkarte 23 montiert, die eine Steuerung und einem Vibrationsmotor 24 trägt. Die Leiterkarte ist über eine Kabelverbindung mit einer zur Schnittstelleneinrichtung des Plattenträgers passenden Kontaktiereinrichtung 25 verbunden, welche so an den Rahmen montiert wird, dass beim Einlegen in den Plattenträger eine Verbindung hergestellt wird.

Figur 6 zeigt eine Zubehörvorrichtung in Form einer Leiterplatte mit 96 LEDs, die gemeinsam mit der Mikroplatte in den Plattenträger gelegt werden, um eine individuelle Bestrahlung eines jeden Wells einer 96 Well Mikroplatte zu erhalten. Die Versorgung und Steuerung der LEDs wird durch Steckkontakte über die Schnittstelle des Plattenträgers erreicht. Somit können alle oder einzelne Wells einer 96 Well Mikroplatte zielgerichtet beleuchtet werden, beispielsweise um darin ablaufende biologische oder photochemische Prozesse zu unterstützen, und einzeln für eine Messung am betreffenden Well kurzzeitig abgeschaltet werden.

## Patentansprüche

1. Eine Kombination eines Mikroplatten-Lesegeräts mit einer Zubehörvorrichtung umfassend eine Aufnahmevorrichtung (1) zur Aufnahme einer Mikroplatte vorgegebener Abmessungen, die eine Vielzahl von Vertiefungen aufweist, einen optischen Detektor (9) zur Erfassung einer optischen Strahlung an jeweils einzelnen der Vertiefungen einer in der Aufnahmevorrichtung aufgenommenen Mikroplatte und eine Positioniermechanik (2, 3), wobei die Aufnahmevorrichtung über die Positioniermechanik (2, 3) in zumindest einer Raumrichtung beweglich angeordnet ist, um die aufgenommene Mikroplatte bezüglich des optischen Detektors (9) für aufeinanderfolgende Messungen an unterschiedlichen Vertiefungen zu positionieren, wobei die Aufnahmevorrichtung (1) eine Schnittstelleneinrichtung (16) aufweist, wobei die Zubehörvorrichtung (20) in die Aufnahmeeinrichtung (1) eingesetzt ist und die Schnittstelleneinrichtung (16) ausgebildet ist, eine Energie- und/oder Datenverbindung und/oder eine Verbindung zur Medien-Versorgung und/oder Medien-Entsorgung von dem Mikroplatten-Lesegerät zu der gemeinsam mit oder anstelle einer Mikroplatte oder einem anderen Probenbehälter in die Aufnahmevorrichtung (1) eingesetzten Zubehörvorrichtung (20) für Zusatzfunktionen bereitzustellen, wobei die Zubehörvorrichtung (20) eine mit der Schnittstelleneinrichtung (16) des Mikroplatten-Lesegeräts zusammenwirkende Gegenstelle (21, 10) aufweist, über die eine von der Zubehörvorrichtung (20) bereitgestellte Zusatzfunktion angesteuert und/oder mit Energie versorgt wird.

2. Eine Kombination nach Anspruch 1, bei der die Schnittstelleneinrichtung (16) ausgebildet ist, die Energie- und/oder Datenverbindung über elektrische Kontakte (4), mittels optischer Signalübertragung und/oder durch Kopplung über elektrische, magnetische oder elektromagnetische Felder herzustellen.

3. Eine Kombination nach Anspruch 1, bei der die Schnittstelleneinrichtung (16) eine mittels einer Schlauchverbindung (5) ausgeführte Medien-Schnittstelle (5) zur Medien-Versorgung und/oder Medien-Entsorgung bereitstellt.

4. Eine Kombination nach Anspruch 3, bei der die Medien-Schnittstelle (5) zur Ver- und/oder Entsorgung mit bzw. von mindestens einem der folgenden Medien: Luft, CO2, Sauerstoff, Stickstoff, Wasser, Reagenzien, ausgebildet ist.

5. Eine Kombination nach einem der vorangehenden Ansprüche, mit einer Steuerungseinrichtung (15), die ausgebildet ist, über die Schnittstelleneinrichtung (16) Zusatzfunktionen einer gemeinsam mit oder anstelle einer Mikroplatte in die Aufnahmevorrichtung (1) eingesetzten Zubehörvorrichtung (20) zu aktivieren.

6. Eine Kombination nach einem der vorangegangenen Ansprüche, wobei die Zubehörvorrichtung (20) ausgebildet ist, gemeinsam mit einer Mikroplatte in die Aufnahmevorrichtung (1) des Mikroplatten-Lesegeräts eingelegt zu werden und mindestens eine der folgenden Einrichtungen aufweist:
- eine Temperiereinheit, insbesondere Heizung, die über die Schnittstelleneinrichtung (16) angesteuert und mit Energie versorgt wird, um in Vertiefungen der Mikroplatte enthaltene Proben zu temperieren;
- eine Beleuchtungseinrichtung, die über die Schnittstelleneinrichtung (16) angesteuert und mit Energie versorgt wird;
- zu einer oder mehrerer der Vertiefungen der Mikroplatte führende Elektroden sowie eine mit den Elektroden verbundene Steuer- oder Messelektronik, die über die Schnittstelleneinrichtung (16) angesteuert wird, um in den Vertiefungen der Mikroplatte enthaltene Proben elektrisch anzuregen oder eine elektrische Eigenschaft der Proben zu messen;
- eine Vorrichtung zum Zuführen und gegebenenfalls Verteilung mindestens eines Mediums an mindestens eine der Vertiefungen der Mikroplatte, wobei das Medium über die Schnittstelleneinrichtung (16) bereitgestellt wird; oder
- einen Aktuator, insbesondere ein Ventil oder eine Dosierpumpe, zum Applizieren von Reagenzien, der über die Schnittstelleneinrichtung (16) angesteuert wird, sowie ein Verteilsystem, insbesondere Mikrokanalsystem, zur Verteilung der Reagenzien in die Vertiefungen der Mikroplatte.

7. Eine Kombination nach einem der vorangegangenen Ansprüche, wobei die Zubehörvorrichtung (20) eine bewegliche Aufnahme für eine Mikroplatte oder einen anderen Probenbehälter, sowie einen mit der beweglichen Aufnahme gekoppelten Antrieb zum Schütteln und Durchmischen von Proben, insbesondere Ultraschallschüttler, aufweist und der Antrieb über die Schnittstelleneinrichtung (16) angesteuert und mit Energie versorgt wird.

8. Eine Kombination nach einem der vorangehenden Ansprüche, wobei die Zubehörvorrichtung (20) ausgebildet ist, in die Aufnahmevorrichtung (1) des Mikroplatten-Lesegeräts eingelegt zu werden und eine der folgenden Einrichtungen aufweist:
- einen Temperatursensor, dessen Temperaturmesswerte über die Schnittstelleneinrichtung (16) übertragen werden;
- einen Feuchtesensor, dessen Luftfeuchtemesswerte über die Schnittstelleneinrichtung (16) übertragen werden;
- einen Sensor zum Erfassen der Lage oder Beschleunigung aufweist, dessen Positions- oder Beschleunigungswerte über die Schnittstelleneinrichtung (16) übertragen werden;
- einen Gassensor zum Erfassen einer künstlich hergestellten Atmosphäre aufweist, dessen Messwerte für gemessene Gaskonzentrationen über die Schnittstelleneinrichtung (16) übertragen werden;
- einen optischen Sensor zum Vermessen einer Anregungslichtquelle des Mikroplatten-Lesegeräts aufweist, dessen Messwerte über die Schnittstelleneinrichtung (16) übertragen werden;
- eine Lichtquelle aufweist, die ausgebildet ist, ein optisches Signal mit steuerbarer Intensität, Wellenlänge und/oder Signalverlauf zu erzeugen, die über die Schnittstelleneinrichtung (16) mit Energie versorgt und angesteuert wird;
- einen Berührungs- oder Annäherungssensor aufweist, dessen Messwerte über die Schnittstelleneinrichtung (16) übertragen werden
- eine UV-Lichtquelle (12) zum Desinfizieren eines Innenraums des Mikroplatten-Lesegeräts aufweist, die über die Schnittstelleneinrichtung (16) angesteuert und mit Energie versorgt wird;
- mindestens eine Staubsaugvorrichtung zum Reinigen eines Innenraums des Mikroplatten-Lesegeräts aufweist, die über die Schnittstelleneinrichtung (16) angesteuert und mit Energie versorgt wird;
- eine Blasvorrichtung zum Reinigen von Optiken im Mikroplatten-Lesegerät, die über die Schnittstelleneinrichtung (16) angesteuert und mit Energie versorgt wird;
- einen Lüfter, der zum schnellen Abkühlen oder zum schnellen Luftwechsel in einem Innenraum des Mikroplatten-Lesegeräts über die Schnittstelleneinrichtung (16) angesteuert und mit Energie versorgt wird.

9. Eine Kombination nach einem der vorangegangenen Ansprüche, wobei die Zubehörvorrichtung (20) ausgebildet ist, in die Aufnahmevorrichtung (1) des Mikroplatten-Lesegeräts eingelegt zu werden und mindestens einen Steck- oder Stellplatz für einen Probenbehälter aufweist.

## Claims

1. Combination of a microplate reader with an accessory device, comprising a receiving device (1) for receiving a microplate having predefined dimensions and having a plurality of wells, an optical detector (9) for detecting optical radiation at respective individual ones of the wells of a microplate received in the receiving device, and a positioning mechanism (2, 3), wherein the receiving device is arranged to be movable in at least one spatial direction via the positioning mechanism (2, 3), in order to position the received microplate relative to the optical detector (9) for successive measurements at different wells; wherein the receiving device (1) has an interface apparatus (16), wherein the accessory device (20) is inserted into the receiving apparatus (1) and the interface apparatus (16) is configured to provide an energy and/or data connection and/or a connection for media supply to and/or media disposal from the microplate reader to the accessory device (20) that is inserted into the receiving device (1) jointly with or instead of a microplate or another sample container for additional functions, wherein the accessory device (20) has a counterpart (21, 10), which collaborates with the interface apparatus (16) of the microplate reader, via which an additional function provided by the accessory device (20) is controlled and/or supplied with energy.

2. Combination according to claim 1, wherein the interface apparatus (16) is configured to establish the energy and/or data connection via electrical contacts (4), by means of optical signal transmission, and/or by coupling via electric, magnetic or electromagnetic fields.

3. Combination according to claim 1, wherein the interface apparatus (16) provides a media interface (5) configured by means of a tube connection (5) for media supply and/or media disposal.

4. Combination according to claim 3, wherein the media interface (5) is configured for supply with and/or disposal of at least one of the following media: air, CO2, oxygen, nitrogen, water, reagents.

5. Combination according to any one of the preceding claims, with a control apparatus (15) which is configured, via the interface apparatus (16), to activate additional functions of an accessory device (20) that is inserted into the receiving device (1) jointly with or instead of a microplate.

6. Combination according to any one of the preceding claims, wherein the accessory device (20) is configured to be inserted jointly with a microplate into the receiving device (1) of the microplate reader and has at least one of the following apparatuses:
- a temperature control unit, in particular a heater, which is controlled and supplied with energy via the interface apparatus (16) in order to control a temperature of samples contained in the wells of the microplate;
- an illumination apparatus that is controlled and supplied with energy via the interface apparatus (16);
- electrodes leading to one or more of the wells of the microplate as well as control or measurement electronics that are connected to the electrodes and which are controlled via the interface apparatus (16) in order to electrically excite samples contained in the wells of the microplate or to measure an electrical property of the samples;
- a device for supplying and optionally distributing at least one medium to at least one of the wells of the microplate, wherein the medium is provided via the interface apparatus (16); or
- an actuator, in particular a valve or a metering pump, for applying reagents, which is controlled via the interface apparatus (16), as well as a distribution system, in particular a microchannel system, for distributing the reagents into the wells of the microplate.

7. Combination according to any one of the preceding claims, wherein the accessory device (20) has a movable receptacle for a microplate or another sample container, as well as a drive coupled to the movable receptacle for shaking and mixing samples, in particular ultrasonic shakers, and the drive is controlled and supplied with energy via the interface apparatus (16).

8. Combination according to any one of the preceding claims, wherein the accessory device (20) is configured to be inserted into the receiving device (1) of the microplate reader and has one of the following apparatuses:
- a temperature sensor, the temperature measurement values of which are transmitted via the interface apparatus (16);
- a humidity sensor, the air humidity measurement values of which are transmitted via the interface apparatus (16);
- a sensor for detecting a position or acceleration, the position or acceleration values of which are transmitted via the interface apparatus (16);
- a gas sensor for detecting an artificially produced atmosphere, the measured values for measured gas concentrations of which are transmitted via the interface apparatus (16);
- an optical sensor for measuring an excitation light source of the microplate reader, the measured values of which are transmitted via the interface apparatus (16);
- a light source configured to generate an optical signal with a controllable intensity, wavelength, and/or signal profile, which is supplied with energy and controlled via the interface apparatus (16);
- a touch or proximity sensor, the measured values of which are transmitted via the interface apparatus (16);
- a UV light source (12) for disinfecting an interior of the microplate reader, which is controlled and supplied with energy via the interface apparatus (16);
- at least one vacuuming device for cleaning an interior of the microplate reader, which is controlled and supplied with energy via the interface apparatus (16);
- a blowing device for cleaning optics in the microplate reader, which is controlled and supplied with energy via the interface apparatus (16);
- a fan, which is controlled and supplied with energy via the interface apparatus (16) for rapid cooling or rapid air exchange in an interior of the microplate reader.

9. Combination according to any one of the preceding claims, wherein the accessory device (20) is configured to be inserted into the receiving device (1) of the microplate reader and has at least one slot or storage space for a sample container.

## Revendications

1. Combinaison d'un lecteur de microplaques avec un dispositif accessoire comprenant un dispositif de réception (1) destiné à la réception d'une microplaque de dimensions préétablies, qui comporte une pluralité de cavités, un détecteur optique (9) destiné à la détection d'un rayonnement optique au niveau de chacune des cavités individuelles d'une microplaque reçue dans l'appareil de réception et un mécanisme de positionnement (2, 3), l'appareil de réception étant disposé en pouvant être déplacé dans au moins une direction dans l'espace par le mécanisme de positionnement (2, 3), afin de positionner la microplaque reçue, par rapport au détecteur optique (9), pour des mesures successives au niveau de diverses cavités, l'appareil de réception (1) comportant un appareil d'interface (16), le dispositif accessoire (20) étant installé dans l'appareil de réception (1) et l'appareil d'interface (16) étant configuré pour fournir pour des fonctions supplémentaires une connexion d'énergie et/ou de données et/ou une connexion destinée à l'alimentation en milieux et/ou à l'évacuation de milieux du lecteur de microplaques au dispositif accessoire (20) installé dans l'appareil de réception (1) conjointement avec une ou au lieu d'une microplaque ou un ou d'un autre porte-échantillons, le dispositif accessoire (20) comportant un poste correspondant (21, 10) qui coopère avec l'appareil d'interface (16) du lecteur de microplaques, via lequel une fonction supplémentaire fournie par le dispositif accessoire (20) est commandée et/ou alimentée en énergie.

2. Combinaison selon la revendication 1, dans laquelle l'appareil d'interface (16) est configuré pour réaliser la connexion d'énergie et/ou de données via des contacts électriques (4), au moyen de transmission de signaux optiques et/ou par couplage via des champs électriques, magnétiques ou électromagnétiques.

3. Combinaison selon la revendication 1, dans laquelle l'appareil d'interface (16) fournit pour l'alimentation en milieux ou l'évacuation de milieux une interface de milieux (5) réalisée au moyen d'une connexion par tuyau souple (5).

4. Combinaison selon la revendication 3, dans laquelle l'interface de milieux (5) est configurée pour l'alimentation et/ou l'évacuation en au moins ou respectivement d'au moins un des milieux suivants : air, CO2, oxygène, azote, eau, réactifs.

5. Combinaison selon l'une quelconque des revendications précédentes, comportant un appareil de commande (15), qui est configuré pour activer via l'appareil d'interface (16) des fonctions supplémentaires d'un dispositif accessoire (20) installé conjointement avec une ou au lieu d'une microplaque dans l'appareil de réception (1).

6. Combinaison selon l'une quelconque des revendications précédentes, dans laquelle le dispositif accessoire (20) est configuré pour être inséré conjointement avec une microplaque dans l'appareil de réception (1) du lecteur de microplaques et comporte au moins un des appareils suivants:
- une unité de mise en température, en particulier un chauffage, qui est commandée et alimentée en énergie via l'appareil d'interface (16), afin de mettre en température des échantillons contenus dans des cavités de la microplaque;
- un appareil d'illumination qui est commandé et alimenté en énergie via l'appareil d'interface (16);
- des électrodes conduisant à une ou plusieurs des cavités de la microplaque ainsi qu'une électronique de commande ou de mesure reliée aux électrodes, qui est commandée via l'appareil d'interface (16), afin d'exciter électriquement des échantillons contenus dans les cavités de la microplaque ou de mesurer une propriété électrique des échantillons;
- un dispositif destiné à l'apport et éventuellement la distribution d'au moins un milieu à au moins une des cavités de la microplaque, le milieu étant fourni via l'appareil d'interface (16) ; ou
- un actionneur, en particulier une vanne ou une pompe doseuse, destiné à l'application de réactifs, qui est commandé via l'appareil d'interface (16), ainsi qu'un système de distribution, en particulier un système microcanal, destiné à la distribution des réactifs dans les cavités de la microplaque.

7. Combinaison selon l'une quelconque des revendications précédentes, dans laquelle le dispositif accessoire (20) comporte un logement mobile pour une microplaque ou un autre porte-échantillons, ainsi qu'un entraînement accouplé au logement mobile, destiné au secouement et à l'homogénéisation d'échantillons, en particulier un secoueur à ultrasons, et l'entraînement est commandé et alimenté en énergie via l'appareil d'interface (16).

8. Combinaison selon l'une quelconque des revendications précédentes, dans laquelle le dispositif accessoire (20) est configuré pour être inséré dans l'appareil de réception (1) du lecteur de microplaques et comporte un des appareils suivants :
- un capteur de température, dont les valeurs mesurées de température sont transmises via l'appareil d'interface (16);
- un capteur d'humidité, dont les valeurs mesurées de l'humidité de l'air sont transmises via l'appareil d'interface (16);
- un capteur destiné à la détection de la position ou de l'accélération, dont des valeurs de position ou d'accélération sont transmises via l'appareil d'interface (16);
- un capteur de gaz destiné à la détection d'une atmosphère produite artificiellement, dont les valeurs mesurées de concentrations de gaz mesurées sont transmises via l'appareil d'interface (16);
- un capteur optique destiné à la mesure d'une source de lumière d'excitation du lecteur de microplaques, dont les valeurs mesurées sont transmises via l'appareil d'interface (16);
- une source de lumière qui est configurée pour produire un signal optique à intensité, longueur d'onde et/ou allure de signal réglable(s), qui est commandée et alimentée en énergie via l'appareil d'interface (16);
- un capteur de contact ou de rapprochement, dont les valeurs mesurées sont transmises via l'appareil d'interface (16);
- une source de lumière UV (12) destinée à la désinfection d'un intérieur du lecteur de microplaques, qui est commandée et alimentée en énergie via l'appareil d'interface (16);
- au moins un dispositif aspirateur de poussières destiné au nettoyage d'un intérieur du lecteur de microplaques, qui est commandé et alimenté en énergie via l'appareil d'interface (16);
- un dispositif soufflant destiné au nettoyage d'optiques dans le lecteur de microplaques, qui est commandé et alimenté en énergie via l'appareil d'interface (16);
- un ventilateur qui, pour le refroidissement rapide ou pour le renouvellement rapide de l'air dans un intérieur du lecteur de microplaques, est commandé et alimenté en énergie via l'appareil d'interface (16).

9. Combinaison selon l'une quelconque des revendications précédentes, dans laquelle le dispositif accessoire (20) est configuré pour être inséré dans l'appareil de réception (1) du lecteur de microplaques et comporte au moins un emplacement de fixation ou de position pour un porte-échantillons.
